# EUROPEAN PATENT SPECIFICATION

(11) **EP 2 821 864 B1**
(45) Date of publication and mention of the grant of the patent: **21.10.2015**
(21) Application number: 13174970.7
(22) Date of filing: 03.07.2013
(51) Int. Cl.: G05B 15/02, G05B 19/042, A01B 69/00, F24F 11/00, G06F 9/44

(54) **User interface panel for an agricultural machine**
Benutzerschnittstellentafel für Landwirtschaftsmaschine
Panneau d'interface d'utilisateur pour une machine agricole

(43) Date of publication of application: 07.01.2015
(73) Proprietor: Kverneland Group Mechatronics BV, 2153 LR Nieuw-Vennep (NL)
(72) Inventor: Navon, Shay, 1183 CT Amstelveen (NL); Biesenbeek, Sander, 2151 ED Nieuw Vennep (NL)
(74) Representative: Bittner, Thomas L.

(56) References cited:
- EP-A1- 1 332 658
- EP-A1- 2 343 642
- EP-A1- 2 472 902
- GB-A- 2 484 282
- US-A1- 2006 052 884

## Description

The invention refers to a method for controlling an auxiliary function by a control element in an alectronic control system of an agricultural machine, an electronic control system, and a computer program product.

### Background

Increasingly, for agricultural machines electronic control of one or more functional elements of the agricultural machine is used.

A common standard, namely ISO 11783, was proposed for providing a network infrastructure for transmitting data between the various devices that may compose an agricultural machine.

With respect to the network infrastructure, a common data bus is provided to which different components are connected. Through the data bus data can be exchanged between the components connected to the data bus. Among the components usually there are a user terminal, and a plurality of electronic control units each of which is assigned to a functional element of the agricultural machine. The electronic unit provides control signals to the functional element assigned to the respective electronic unit for operating the functional element. Such functional element may refer to an element of a tractor or a functional element of an implement. In conclusion, the network infrastructure may provide for data communication within a tractor or between the tractor and an implement connected to the tractor.

According to a standard method of operation, user input is received through the user terminal. From the user input control signals are generated and transmitted to the electronic control units for controlling operation of the functional elements of the agricultural machine. It has been proposed to use auxiliary devices for controlling operation of the agricultural machine, e.g. a joystick or some other hardware element providing the option of receiving user input. Such auxiliary devices are used for controlling auxiliary functions of one or more functional elements of the agricultural machine. Through the user terminal input function of the auxiliary device can be mapped to control functions of the functional element of the agricultural device. For example, by moving a joystick functionally connected to the user terminal via the data bus, through the user terminal control signals are provided to the electronic control unit for which the control function is mapped to the joystick operation. Operation of the functional element assigned to the electronic control unit is controlled through a chain of operation from the joystick to the user terminal and finally to the functional element via the electronic control unit.

Document GB 2484282 A refers to a method of controlling a tractor and an agricultural tractor control system comprising an electronic control unit (ECU). The ECU is arranged to receive in real time signals from a plurality of sensors associated with operating functions of the tractor. The ECU is also arranged to output control signals to a plurality of controlled operating components and receive a Macro inputted by a user / driver preferably by direct definition or Internet download; each macro comprises a condition and a command. The condition includes a trigger value and a corresponding input variable sensed by a respective sensor. The command involves the transmission of one of said output control signals to control an operating component in a predetermined manner. The ECU is operable to run said macro during which the command is executed in response to the condition being met.

Document EP 2 472 902 A1 relates to an image construction apparatus having functions of, based on an instruction form a user, creating a binary-coded program, creating a database, and associating the database with an image part. The use of those functions allows the user to easily construct an image including an image part associated with both the program and the database. The invention enable easy association of information on an apparatus to be operated with image parts constructing an image displayed by a remote control apparatus. The invention is suitable for constructing the screen of the remote control apparatus having a graphical user interface.

Document EP 2 343 642 A1 discloses a building control system having a graphical user interface which is indicated by specification of a control object in the building control system being received. The control object is associated with an address. A selection of a functional object from a set of predefined functional objects is received. The functional object is associated with a graphical object from a set of predefined graphical objects. The control object is associated with the functional object by providing to the graphical object a pointer to said address. The graphical object is provided with data relating to a target value of the pointer and a panel comprising the graphical object is generated.

Document EP 1 332 658 A1 relates to a utility machine having an actuator and a portable control device. The portable control device exchanges data with the actuator over a wireless data transmission arrangement and is equipped with an input arrangement and an output arrangement. The actuator can be influenced by the input arrangement of the control device. A sensor for measuring an operating parameter of the utility machine influenced by the actuator generates a measured value that can be transmitted over the wireless data transmission arrangement to the control device. The output arrangement can be operated to display information that depends on the measured value of the sensor.

Document US 2006 / 0052884 A1 refers to a computer program product encoding computer programs for executing a drag-and-drop computer process of generating a custom user interface for a building automation system. The drag-and-drop computer process comprises selecting an automation device in the building automation system and at least one function for the automation device. The drag-and-drop computer process comprises moving an icon representing the automation device onto a custom user interface, and moving a graphic for the at least one function onto the custom user interface. The drag-and-drop computer process comprises generating program code to link the graphic to the at least one function for the automation device.

### Summary

It is an object to provide technology for improved controlling of an auxiliary function in an electronic control system of an agricultural machine.

According to one aspect, a method for controlling an auxiliary function by a control element in an electronic control system of an agricultural machine according to claim 1 is provided. Also, an electronic control system for controlling a function of an agricultural machine by an auxiliary control element and a computer-readable medium according to claims 8 and 12, respectively, are provided. Further embodiments are disclosed in the dependent claims.

According to one aspect, a method for controlling an auxiliary function by a control element in an electronic control system of an agricultural machine is provided. The electronic control system comprises a data bus to which a user terminal and an electronic control unit (ECU) are functionally connected. Especially, the functional connection provides data transmission for the user terminal and the electronic control unit through the data bus. Further components may be connected to the data bus, for example, a task control unit.

By the data bus and the components connected to it, the electronic control system is provided with a network infrastructure for transmitting data between components of the agricultural machine. The electronic control unit coupled to the data bus is assigned to a functional element of the agricultural machine. Due to the functional assignment the electronic control unit is configured to provide control signals to the functional element for operating the functional element. The electronic control unit may be configured to receive operation signals from the function element which characterize the operation of the functional element.

In the electronic control system, for data processing a processor connected to a memory element is provided. The processor may be provided in the user terminal or outside of the user terminal, but functionally connected to the input device of the user terminal. The user terminal sometimes is referred to as virtual terminal of the electronic control system of the agricultural machine. The user terminal may be configured to provide user access to normal or standard control functions with respect to functional components of the agricultural machine.

In the method for controlling the auxiliary function a virtual control element configuration menu is displayed on a terminal display. The terminal display is configured for displaying video information and receiving user input. The terminal display is provided on the user terminal and / or an additional user terminal separated from the user terminal and connected to the data bus and the user terminal. The additional user terminal may optionally be provided, e.g. by means of a tablet computer or some other mobile device, for example a smart phone, which can be functionally connected to the data bus by a wired and / or wireless connection. By the functional connection electronic data may be transmitted between the additional user terminal and the components connected to the data bus.

The terminal display is provided with an input device, e.g. a touch sensitive device and / or a mouse device. Through the user terminal and / or the additional user terminal, a user configuration input is received for mapping at least one virtual control element displayable on the terminal display to an auxiliary function of the electronic control unit. The user input may be received through the user terminal or / and, if the additional user terminal is present, through the additional user terminal. The term "auxiliary function" as used here refers to a function of the electronic control unit which, according to the prior art, is accessible by the user through an additional control device separated from the user terminal, e.g. a joystick, such separated devices being operationally connected to the electronic control unit via the user terminal.

Following, the at least one virtual control element is mapped to the auxiliary function of the electronic control unit according to the user configuration input. For example, fast upward or downward movement of a functional element is provided by the auxiliary function. After the mapping, such fast movement can be initiated by the user by acting on the at least one virtual control element to be displayed on the terminal display.

In a next step the at least one virtual control element is displayed on the terminal display. Through the user terminal, a user control input for the auxiliary function through the at least one virtual control element displayed is received. In response to the received user control input a control signal mapped to the auxiliary function of the electronic control unit is generated according to the user control input. The generated control signal is provided to the electronic control unit through the data bus for having the electronic control unit controlled the functional element of the agricultural machine according to the signal. Referring to the example mentioned above, the functional element would be moved fast up or down. Such operation of the functional element is accessible for the user by "acting on" the virtual control element displayed on the terminal display. No additional control device is necessary for providing the auxiliary function. There is no need for implementation of such additional device, e.g. a joystick, on the agricultural machine. The auxiliary function is implemented and made available to the user according to the user definition.

According to another aspect, an electronic control system for controlling a function of an agricultural machine by an auxiliary control element is provided. The system comprises a data bus, a user terminal connected to the data bus, and an electronic control unit (ECU) connected to the data bus and assigned to a functional element of the agricultural machine. A terminal display is provided on the user terminal and / or an additional user terminal separated from the user terminal and for data transmission functionally or operationally connected to the data bus and the user terminal. The electronic control system is configured for: displaying a virtual control element configuration menu on a terminal display provided on the user terminal and / or the additional user terminal, through the user terminal and / or the additional user terminal, mapping the at least one virtual control element to the auxiliary function of the electronic control unit according to the user configuration input, displaying the at least one virtual control element on the terminal display, through the user terminal, receiving user control input for the auxiliary function through the at least one virtual control element displayed on the terminal display, and generating a control signal mapped to the auxiliary function of the electronic control unit according to the user control input and providing the control signal to the electronic control unit through the data bus for having the electronic control unit controlled the functional element of the agricultural machine according to the control signal.

According to still another aspect, a computer-readable medium is provided.

Data communication between some or all components of the electronic control system may be done at least in part by wireless communication. Wireless data communication may be combined with wired communication.

The terminal display may be divided into a plurality of sub-display windows, and the at least one virtual control element may be displayed in a sub-display window different from a further sub-display window.

In the further sub-display window operation data of the agricultural machine may be outputted.

The user control input for the at least one virtual control element may be received in response to the outputting of the operation data.

The operation data may be outputted in response to having the electronic control unit controlled the functional element of the agricultural machine according to a former user control input.

Both the sub-display window and the other sub-display window may be displayed on the terminal display at the same time.

A plurality of virtual control elements may be displayed on the terminal display.

With respect to the electronic control system for controlling a function of an agricultural machine, the functional element may be provided on an agricultural device selected from the following devices: tractor and implement like a sprayer, a seeder, a mowing apparatus, a ploughing apparatus or a baling apparatus.

With respect to the electronic control system for controlling a function of an agricultural machine, the user terminal may be provided on a tractor and the functional element is provided on an implement.

In still a further embodiment, the data bus is implemented according to ISO 11783.

### Description of further embodiments

Following, further embodiments are described, by way of example, with reference to figures. In the drawings show:
- Fig. 1: a schematic representation of an electronic control system of an agricultural machine,
- Fig. 2: a schematic representation of a terminal display showing a virtual control element configuration manual, and
- Fig. 3: a schematic representation of the terminal display showing a presentation of operation data and a presentation of a plurality of virtual control elements on a sub-display window and another sub-display window, respectively.

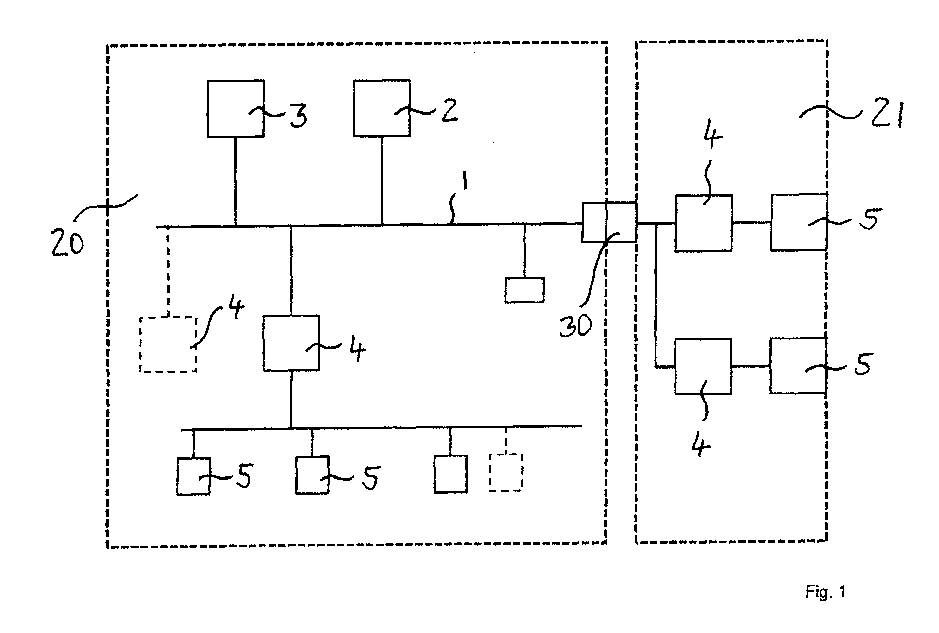

Fig. 1 shows a schematic representation of an electronic control system of an agricultural machine. A network infrastructure is provided with a data bus 1 to which a user terminal 2, a task controller 3, and a plurality of electronic control units 4 are connected. Each of the electronic control units 4 is assigned to a functional element 5 of the agricultural machine. The functional element 5 may be a component of a tractor or a component of an implement connected to a tractor. Through the data bus 1 electronic data may be transmitted between the components connected to the data bus 1. The electronic control system may implement the ISO 11783 standard, preferably the ISO 11783-11 standard.

In the embodiment shown in Fig. 1, the electronic control system is provided in a tractor 20 and an implement 21 connected to the tractor 20. The data bus 1 is provided with a plug connector 30.

The user or operator terminal 2 is provided with a terminal display 6 and provides for user control and user display. The user terminal 2 is provided with a processor unit comprising a processor and a memory element connected to the processor. Multiple software applications implemented on the user terminal may be running simultaneously.

Through the user terminal 2 user input may be received for controlling the functional elements 5 of the agricultural machine. Also, through the terminal display 6 operation information may be displayed to the user.

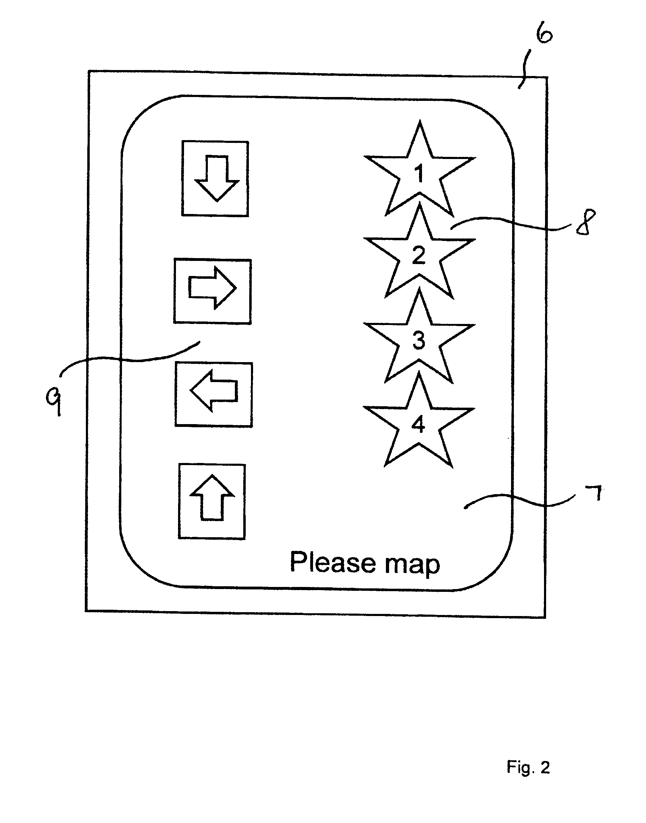

In order to provide additional functions (auxiliary functions) to the user a virtual control element configuration manual 7 is displayed on the terminal display 6 as shown in Fig. 2. A plurality of auxiliary sub-functions 8 is presented. In addition, a plurality of virtual control elements 9 displayable on the terminal display 6 is presented to the user. By user configuration input the user is able to map the plurality of auxiliary sub-functions 8 to the plurality of virtual control elements 9. For example, the user may first touch one of the auxiliary sub-functions 8 followed by touching one of the plurality of virtual control elements 9. The two elements touched after each other are mapped. Such mapping, for example, may be done storing electronic information about the assignment of the touched elements to each other in the memory. In operation, such electronic information may be used for mapping user input to the correct auxiliary function.

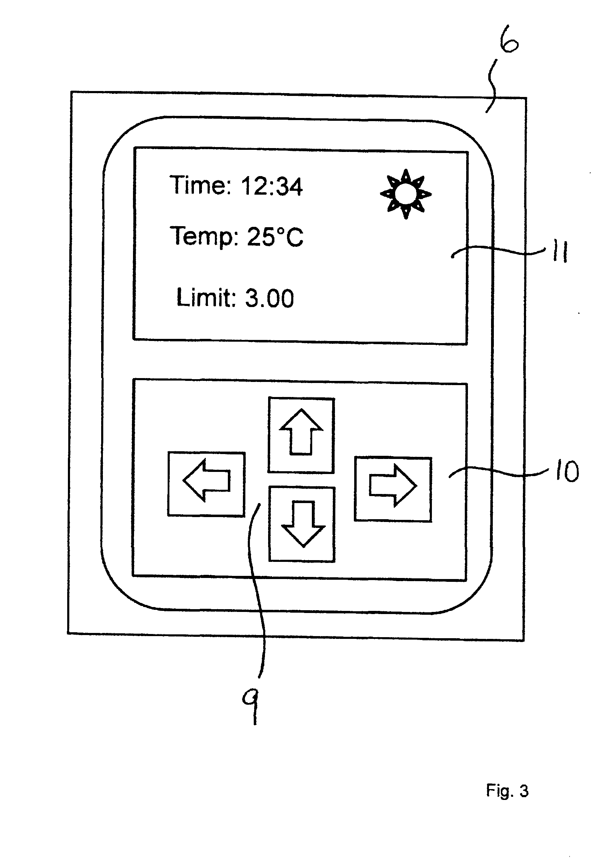

After finalizing the virtual control element configuration, the user is able to control the plurality of auxiliary functions 8 by using the virtual control elements 9 displayed on the terminal 6 as shown in Fig. 3 during operation. According to the representation in Fig. 3, two sub-display windows 10, 11 are displayed. One of the sub-display windows 10 is assigned to the presentation of the virtual control elements 9. The other sub-display window 11 contains video information on operation data of the agricultural machine. For example, speed data, time data and / or sensor data detected by a sensor provided on the functional element 5 and transmitted via the electronic control unit 4 and the data bus 1 to the user terminal 6 may be depicted.

The process of defining and using the auxiliary function(s) as described above may at least in part be performed by using an additional user terminal, for example, provided by a mobile device, e.g. a tablet computer or a smart phone. The additional user terminal (not shown) will connect to the user terminal 2 and optionally to other components through the data bus 1. Data communication will comply with the data protocol standard implemented by the data bus. In case of providing the additional user terminal connected to the data bus 1, features described for the terminal display 6 above at least in part may be implemented by the additional user terminal. For example, the user configuration input for mapping the plurality of auxiliary sub-functions 8 to the plurality of virtual control elements 9 may be received through the additional user terminal. User input signals may be transmitted from the additional user terminal to the processor of the user terminal for finally provide control signals to the plurality of electronic control units 4. The additional user terminal may substitute additional control devices, e.g. a joystick, used for auxiliary control function to the user or operator.

The features disclosed in this specification, the figures and / or the claims may be material for the realization of the invention in its various embodiments, taken in isolation or in various combinations thereof.

## Claims

1. A method for controlling an auxiliary function by a control element in an electronic control system of an agricultural machine (20, 21), the electronic control system being provided with a data bus (1) to which a user terminal (2) and an electronic control unit (4) assigned to a functional element (5) of the agricultural machine (20, 21) are connected, the method comprising:
- displaying a virtual control element configuration menu (7) on a terminal display (6) provided on the user terminal (2) and / or an additional user terminal separated from the user terminal (2) and connected to the data bus (1) and the user terminal (2), whereas a plurality of auxiliary functions (8) and a plurality of virtual control elements (9) are presented on the terminal display (6) to the user,
- through the user terminal (2), receiving user configuration input for mapping one of the plurality of auxiliary functions (8) to one of the plurality of virtual control elements (9),
- mapping the selected virtual control element to the selected auxiliary function of the electronic control unit (4) according to the user configuration input, whereas the mapping is done by storing electronic information about the assignment of the selected virtual control element and the selected auxiliary function to each other in a memory,
- displaying the at least one virtual control element on the terminal display (6),
- through the user terminal (2) and / or the additional user terminal, receiving user control input for the selected auxiliary function using the at least one virtual control element displayed on the terminal display (6), and
- generating a control signal mapped to the selected auxiliary function of the electronic control unit (4) according to the user control input and providing the control signal to the electronic control (4) unit through the data bus (1) for having the electronic control unit (4) controlled the functional element of the agricultural machine (20, 21) according to the control signal.

2. The method of claim 1, wherein the terminal display (6) is divided into a plurality of sub-display window, and wherein the at least one virtual control element is displayed in a sub-display window separated from a further sub-display window.

3. The method of claim 2, wherein in the other sub-display window operation data of the agricultural machine (20, 21) are outputted.

4. The method of claim 3, wherein the user control input for the at least one virtual control element is received in response to the outputting of the operation data.

5. The method of claim 3 or 4, wherein the operation data are outputted in response to having the electronic control unit (4) controlled the functional element of the agricultural machine (20, 21) according to a former user control input.

6. The method of one of the claims 2 to 5, wherein both the sub-display window and the other sub-display window are displayed on the terminal display (6) at the same time.

7. The method of one of the preceding claims, wherein a plurality of virtual control elements is displayed on the terminal display (6).

8. An electronic control system for controlling a function of an agricultural machine (20, 21) by an auxiliary control element, comprising
- a data bus (1),
- a user terminal (2) connected to the data bus (1),
- a terminal display (6) provided on the user terminal (2) and / or an additional user terminal separated from the user terminal (2) and connected to the data bus (1) and the user terminal (2), and
- an electronic control unit (4) connected to the data bus (1) and assigned to a functional element of the agricultural machine (20, 21),
wherein the electronic control system is configured for:
- displaying a virtual control element configuration menu on a the terminal display (6) and / or the additional user terminal, whereas a plurality of auxiliary functions (8) and a plurality of virtual control elements (9) are presented on the terminal display (6) to the user,
- through the user terminal (2) and / or the additional user terminal, receiving user configuration input for mapping one of the plurality of auxiliary functions (8) to one of the plurality of virtual control elements (9),
- mapping the selected virtual control element to the selected auxiliary function of the electronic control unit (4) according to the user configuration input, whereas the mapping is done by storing electronic information about the assignment of the selected virtual control element and the selected auxiliary function to each other in a memory,
- displaying the at least one virtual control element on the terminal display (6),
- through the user terminal (2) and / or the additional user terminal, receiving user control input for the selected auxiliary function using the at least one virtual control element displayed on the terminal display (6), and
- generating a control signal mapped to the selected auxiliary function of the electronic control unit (4) according to the user control input and providing the control signal to the electronic control unit (4) through the data bus (1) for having the electronic control unit (4) controlled the functional element of the agricultural machine (20, 21) according to the control signal.

9. The electronic control system of claim 8, wherein the functional element is provided on an agricultural device selected from the following devices: tractor and implement like a sprayer, a seeder, a mowing apparatus, ploughing apparatus or baling apparatus.

10. The electronic control system of claim 8 or 9, wherein the user terminal is provided on a tractor and the functional element is provided on an implement.

11. The electronic control system of one of the claims 8 to 10, wherein the data bus is implemented according to ISO 11783.

12. A computer-readable medium including a computer program for controlling an auxiliary function by a control element in an electronic control system of an agricultural machine (20, 21), the electronic control system being provided with a data bus (1) to which a user terminal (2) comprising a terminal display (6) and an electronic control unit (4) assigned to a functional element (5) of the agricultural machine (20, 21) are connected, the computer-readable medium comprising:
- means for displaying a virtual control element configuration menu on the terminal display (6), whereas a plurality of auxiliary functions (8) and a plurality of virtual control elements (9) are presented on the terminal display (6) to the user,
- means for receiving user configuration input for mapping one of the plurality of auxiliary functions (8) to one of the plurality of virtual control elements (9),
- means for mapping the selected virtual control element to the selected auxiliary function of the electronic control unit (4) according to the user configuration input, whereas the mapping is done by storing electronic information about the assignment of the selected virtual control element and the selected auxiliary function to each other in a memory,
- means for displaying the at least one virtual control element on the terminal display (6),
- means for receiving, through the user terminal (2), user control input for the selected auxiliary function using the at least one virtual control element displayed on the terminal display (6), and
- means for generating a control signal mapped to the selected auxiliary function of the electronic control unit (4) according to the user control input and providing the control signal to the electronic control (4) unit through the data bus (1) for having the electronic control unit (4) controlled the functional element of the agricultural machine (20, 21) according to the control signal.

## Patentansprüche

1. Verfahren zum Steuern einer Hilfsfunktion mittels eines Steuerelements in einem elektronischen Steuersystem einer landwirtschaftlichen Maschine (20, 21), wobei das elektronische Steuersystem mit einem Datenbus (1) ausgestattet ist, an welchen ein Benutzerendgerät (2) und eine elektronische Steuereinheit (4), die einem Funktionselement (5) der landwirtschaftlichen Maschine (20, 21) zugewiesen ist, verbunden sind, wobei das Verfahren umfasst:
- Anzeigen eines virtuellen Steuerelementkonfigurationsmenüs (7) auf einer Endgerätanzeige (6), welche auf dem Benutzerendgerät (2) vorgesehen ist, und/oder einem zusätzlichen Benutzerendgerät, welches getrennt vom Benutzerendgerät (2) ist und mit dem Datenbus (1) und dem Benutzerendgerät (2) verbunden ist, wo mehrere Hilfsfunktionen (8) und mehrere virtuelle Steuerelemente (9) auf der Endgerätanzeige (6) dem Benutzer angezeigt werden,
- Empfangen, durch das Benutzerendgerät (2), von Benutzerkonfigurationseingaben zum Abbilden einer der mehreren Hilfsfunktionen (8) auf einem der mehreren virtuellen Steuerelementen (9),
- Abbilden des ausgewählten virtuellen Steuerelements auf der ausgewählten Hilfsfunktion der elektronischen Steuereinheit (4) gemäß der Benutzerkonfigurationseingabe, wo das Abbilden durch Speichern elektronischer Information über die Zuweisung des ausgewählten virtuellen Steuerelements und der ausgewählten Hilfsfunktion zueinander in einem Speicher ausgeführt wird,
- Anzeigen des wenigstens einen virtuellen Steuerelements auf der Endgerätanzeige (6),
- Empfangen, durch das Benutzerendgerät (2) und/oder das zusätzliche Benutzerendgerät, von Benutzersteuereingaben für die ausgewählte Hilfsfunktion unter Verwendung des wenigstens einen virtuellen Steuerelements, welches auf der Endgerätanzeige (6) angezeigt ist, und
- Erzeugen eines Steuersignals, welches auf der Hilfsfunktion der elektronischen Steuereinheit (4) gemäß der Benutzersteuereingabe abgebildet ist, und Bereitstellen des Steuersignals an die elektronische Steuereinheit (4) über den Datenbus (1), damit die elektronische Steuereinheit (4) das Funktionselement der landwirtschaftlichen Maschine (20, 21) gemäß dem Steuersignal steuert.

2. Verfahren nach Anspruch 1, wobei die Endgerätanzeige (6) in mehrere Unteranzeigefenster geteilt ist und wobei das wenigstens eine virtuelle Steuerelement in einem Unteranzeigefenster, getrennt von einem weiteren Unteranzeigefenster, angezeigt wird.

3. Verfahren nach Anspruch 2, wobei in dem anderen Unteranzeigefenster Betriebsdaten der landwirtschaftlichen Maschine (20, 21) ausgegeben werden.

4. Verfahren nach Anspruch 3, wobei die Benutzersteuereingabe für das wenigstens eine virtuelle Steuerelement als Reaktion auf das Ausgeben der Betriebsdaten empfangen wird.

5. Verfahren nach Anspruch 3 oder 4, wobei die Betriebsdaten als Reaktion auf die Steuerung des Funktionselements der landwirtschaftlichen Maschine (20, 21) durch die elektronische Steuereinheit (4) gemäß einer früheren Benutzersteuereingabe ausgegeben werden.

6. Verfahren nach einem der Ansprüche 2 bis 5, wobei sowohl das Unteranzeigefenster als auch das andere Unteranzeigefenster auf der Endgerätanzeige (6) gleichzeitig angezeigt werden.

7. Verfahren nach einem der vorangehenden Ansprüche, wobei mehrere virtuelle Steuerelemente auf der Endgerätanzeige (6) angezeigt werden.

8. Elektronisches Steuersystem zum Steuern einer Funktion einer landwirtschaftlichen Maschine (20, 21) mittels eines Hilfssteuerelements, umfassend
- einen Datenbus (1),
- ein Benutzerendgerät (2), welches mit dem Datenbus (1) verbunden ist,
- eine Endgerätanzeige (6), welche auf dem Benutzerendgerät (2) und/oder einem zusätzlichen Benutzerendgerät, welches vom Benutzerendgerät (2) getrennt und mit dem Datenbus (1) und dem Benutzerendgerät (2) verbunden ist, vorgesehen ist, und
- eine elektronische Steuereinheit (4), welche mit dem Datenbus (1) verbunden und einem Funktionselement der landwirtschaftlichen Maschine (20, 21) zugewiesen ist, wobei das elektronische Steuersystem konfiguriert ist zum:
- Anzeigen eines virtuellen Steuerelementkonfigurationsmenüs auf einer Endgerätanzeige (6) und/oder einem zusätzlichen Benutzerendgerät, wo mehrere Hilfsfunktionen (8) und mehrere virtuelle Steuerelemente (9) auf der Endgerätanzeige (6) dem Benutzer angezeigt werden,
- Empfangen, durch das Benutzerendgerät (2) und/oder das zusätzliche Benutzerendgerät, von Benutzerkonfigurationseingaben zum Abbilden einer mehreren Hilfsfunktionen (8) auf einem mehreren virtuellen Steuerelementen (9),
- Abbilden des ausgewählten virtuellen Steuerelements auf der ausgewählten Hilfsfunktion der elektronischen Steuereinheit (4) gemäß der Benutzerkonfigurationseingabe, wo das Abbilden durch Speichern elektronischer Information über die Zuweisung des ausgewählten virtuellen Steuerelements und der ausgewählten Hilfsfunktion zueinander in einem Speicher ausgeführt wird,
- Anzeigen des wenigstens einen virtuellen Steuerelements auf der Endgerätanzeige (6),
- Empfangen, durch das Benutzerendgerät (2) und/oder das zusätzliche Benutzerendgerät, von Benutzersteuereingaben für die ausgewählte Hilfsfunktion unter Verwendung des wenigstens einen virtuellen Steuerelements, welches auf der Endgerätanzeige (6) angezeigt ist, und
- Erzeugen eines Steuersignals, welches auf der Hilfsfunktion der elektronischen Steuereinheit (4) gemäß der Benutzersteuereingabe abgebildet ist, und Bereitstellen des Steuersignals an die elektronische Steuereinheit (4) über den Datenbus (1), damit die elektronische Steuereinheit (4) das Funktionselement der landwirtschaftlichen Maschine (20, 21) gemäß dem Steuersignal steuert.

9. Elektronisches Steuersystem nach Anspruch 8, wobei das Funktionselement auf einem landwirtschaftlichen Gerät vorgesehen ist, welches unter den folgenden Geräten ausgewählt ist: Traktor und Arbeitsgerät wie ein Spritzgerät, eine Sämaschine, eine Mähvorrichtung, eine Pflügvorrichtung oder eine Ballenpressvorrichtung.

10. Elektronisches Steuersystem nach Anspruch 8 oder 9, wobei das Benutzerendgerät auf einem Traktor vorgesehen ist und das Funktionselement auf einem Arbeitsgerät vorgesehen ist.

11. Elektronisches Steuersystem nach einem der Ansprüche 8 bis 10, wobei der Datenbus gemäß ISO 11783 umgesetzt ist.

12. Computerlesbares Medium, umfassend ein Computerprogramm zum Steuern einer Hilfsfunktion durch ein Steuerelement in einem elektronischen Steuersystem einer landwirtschaftlichen Maschine (20, 21), wobei das elektronische Steuersystem mit einem Datenbus (1) ausgestattet ist, an welchen ein Benutzerendgerät (2), das eine Endgerätanzeige (6) umfasst, und eine elektronische Steuereinheit (4), die einem Funktionselement (5) der landwirtschaftlichen Maschine (20, 21) zugewiesen ist, verbunden sind, wobei das computerlesbare Medium umfasst:
- Mittel zum Anzeigen eines virtuellen Steuerelementkonfigurationsmenüs auf einer Endgerätanzeige (6), wo mehrere Hilfsfunktionen (8) und mehrere virtuelle Steuerelemente (9) auf der Endgerätanzeige (6) dem Benutzer angezeigt werden,
- Mittel zum Empfangen von Benutzerkonfigurationseingaben zum Abbilden einer der mehreren Hilfsfunktionen (8) auf einer der mehreren virtuellen Steuerelementen (9),
- Mittel zum Abbilden des ausgewählten virtuellen Steuerelements auf der ausgewählten Hilfsfunktion der elektronischen Steuereinheit (4) gemäß der Benutzerkonfigurationseingabe, wo das Abbilden durch Speichern elektronischer Information über die Zuweisung des ausgewählten virtuellen Steuerelements und der ausgewählten Hilfsfunktion zueinander in einem Speicher ausgeführt wird,
- Mittel zum Anzeigen des wenigstens einen virtuellen Steuerelements auf der Endgerätanzeige (6),
- Mittel zum Empfangen, durch das Benutzerendgerät (2), von Benutzersteuereingaben für die ausgewählte Hilfsfunktion unter Verwendung des wenigstens einen virtuellen Steuerelements, welches auf der Endgerätanzeige (6) angezeigt ist, und
- Mittel zum Erzeugen eines Steuersignals, welches auf der Hilfsfunktion der elektronischen Steuereinheit (4) gemäß der Benutzersteuereingabe abgebildet ist, und zum Bereitstellen des Steuersignals an die elektronische Steuereinheit (4) über den Datenbus (1), damit die elektronische Steuereinheit (4) das Funktionselement der landwirtschaftlichen Maschine (20, 21) gemäß dem Steuersignal steuert.

## Revendications

1. Procédé destiné à commander une fonction auxiliaire par un élément de commande dans un système de commande électronique d'une machine agricole (20, 21), le système de commande électronique étant doté d'un bus de données (1) auquel sont connectés un terminal d'utilisateur (2) et une unité de commande électronique (4) affectés à un élément fonctionnel (5) de la machine agricole (20, 21), ledit procédé comprenant les étapes consistant à :
- afficher un menu de configuration virtuel de l'élément de commande (7) sur un affichage de terminal (6) mis en place sur le terminal d'utilisateur (2) et/ou un terminal d'utilisateur supplémentaire séparé du terminal d'utilisateur (2) et connecté au bus de données (1) et au terminal d'utilisateur (2), tandis qu'une pluralité de fonctions auxiliaires (8) et une pluralité d'éléments de commande virtuels (9) sont présentés à l'utilisateur sur l'affichage de terminal (6),
- recevoir, par l'intermédiaire du terminal d'utilisateur (2), une entrée de configuration d'utilisateur pour mettreen correspondance une de la pluralité des fonctions auxiliaires (8) avec une de la pluralité des éléments de commande virtuels (9),
- mettre en correspondance l'élément de commande virtuel sélectionné avec la fonction auxiliaire sélectionnée de l'unité de commande électronique (4) conformément à l'entrée de configuration de l'utilisateur, tandis que la mise en correspondance est effectuée en mémorisant les informations électroniques concernant l'affectation de l'élément de commande virtuel sélectionné et la fonction auxiliaire sélectionnée l'un par rapport à l'autre dans une mémoire,
- afficher au moins un élément de commande virtuel sur l'affichage de terminal (6),
- recevoir, par l'intermédiaire du terminal d'utilisateur (2) et/ou du terminal d'utilisateur supplémentaire, une entrée de commande d'utilisateur pour la fonction auxiliaire sélectionnée en utilisant au moins un élément de commande virtuel affiché sur l'affichage de terminal (6), et
- produire un signal de commande mis en correspondance avec la fonction auxiliaire sélectionnée de l'unité de commande électronique (4) conformément à l'entrée de commande d'utilisateur et fournir le signal de commande à l'unité de commande électronique (4) par l'intermédiaire du bus de données (1) pour que l'unité de commande électronique (4) commande l'élément fonctionnel de la machine agricole (20, 21) conformément au signal de commande.

2. Procédé selon la revendication 1 dans lequel l'affichage de terminal (6) est divisé en une pluralité de fenêtres de sous-affichage et dans lequel au moins un élément de commande virtuel est affiché dans une fenêtre de sous-affichage séparée d'une autre fenêtre de sous-affichage.

3. Procédé selon la revendication 2 dans lequel des données de fonctionnement de la machine agricole (20, 21) sont sorties dans l'autre fenêtre de sous-affichage.

4. Procédé selon la revendication 3 dans lequel l'entrée de commande d'utilisateur pour au moins un élément de commande virtuel est reçue en réponse à la sortie des données de fonctionnement.

5. Procédé selon la revendication 3 ou 4 dans lequel les données de fonctionnement sont sorties en réponse au fait d'avoir l'élément fonctionnel de la machine agricole (20, 21) commandé par l'unité de commande électronique (4) conformément à une entrée de commande d'utilisateur précédente.

6. Procédé selon l'une quelconque des revendications 2 à 5 dans lequel la fenêtre de sous-affichage et l'autre fenêtre de sous-affichage sont affichées en même temps sur l'affichage de terminal (6).

7. Procédé selon l'une quelconque des revendications précédentes, dans lequel une pluralité d'éléments de commande virtuels est affichée sur l'affichage de terminal (6).

8. Système de commande électronique destiné à commander une fonction d'une machine agricole (20, 21) par un élément de commande auxiliaire, comprenant
- un bus de données (1),
- un terminal d'utilisateur (2) connecté au bus de données (1),
- un affichage de terminal (6) mis en place sur le terminal d'utilisateur (2) et/ou un terminal d'utilisateur supplémentaire séparé du terminal d'utilisateur (2) et connecté au bus de données (1) et au terminal d'utilisateur (2), et
- une unité de commande électronique (4) connectée au bus de données (1) et affectée à un élémént fonctionnel de la machine agricole (20, 21),
dans lequel le système de commande électronique est configuré pour :
- afficher un menu de configuration virtuel de l'élément de commande sur l'affichage de terminal (6) et/ou le terminal d'utilisateur supplémentaire, tandis qu'une pluralité de fonctions auxciliaires (8) et une pluralité d'éléments de commande virtuels (9) sont présentées à l'utilisateur sur l'affichage du terminal (6),
- recevoir, par l'intermédiaire du terminal d'utilisateur (2) et/ou du terminal d'utilisateur supplémentaire, une entrée de configuration d'utilisateur pour mettre en correspondance une de la pluralité de fonctions auxiliaires (8) avec une de la pluralité d'éléments de commande vituels (9),
- mettre en correspondance l'élément de commande virtuel sélectionné avec la fonction auxiliaire sélectionnée de l'unité de commande électronique (4) conformément à l'entrée de configuration de l'utilisateur, tandis que la mise en correspondance est effectuée en mémorisant les informations électroniques concernant l'affectation de l'élément de commande virtuel sélectionné et la fonction auxiliaire sélectionnée l'un par rapport à l'autre dans une mémoire,
- afficher au moins un élément de commande virtuel sur l'affichage de terminal (6),
- recevoir, par l'intermédiaire du terminal d'utilisateur (2) et/ou du terminal d'utilisateur supplémentaire, une entrée de commande de l'utilisateur pour la fonction auxiliaire sélectionnée en utilisant au moins l'élément de commande virtuel affiché sur l'affichage de terminal (6), et
- produire un signal de commande mis en correspondance avec la fonction auxiliaire sélectionnée de l'unité de commande électronique (4) conformément à l'entrée de commande d'utilisateur et fournir le signal de commande à l'unité de commande électronique (4) par l'intermédiaire du bus de données (1) pour que l'unité de commande électronique (4) commande l'élément fonctionnel de la machine agricole (20, 21) conformément au signal de commande.

9. Système de commande électronique selon la revendication 8 dans lequel l'élément fonctionnel est mis en place sur un dispositif agricole sélectionné à partir des dispositifs suivants : tracteur et équipement analogue à un pulvérisateur, un semoir, un appareil à faucher, un appareil à labourer ou un appareil à mettre en balles.

10. Système de commande électronique selon la revendication 8 ou 9 dans lequel le terminal d'utilisateur est mis en place sur un tracteur et l'élément fonctionnel est mis en place sur un équipement.

11. Système de commande électronique selon l'une quelconque des revendications 8 à 10 dans lequel le bus de données est mis en oeuvre conformément à la norme ISO 11783.

12. Moyen lisible par un ordinateur comprenant un programme informatique pour commander une fonction auxiliaire par un élément de commande dans un système de commande électronique d'une machine agricole (20, 21), le système de commande électronique étant doté d'un bus de données (1) auquel sont connectés un terminal d'utilisateur (2) comprenant un affichage de terminal (6) et une unité de commande électronique (4) affectés à un élément fonctionnel (5) de la machine agricole (20, 21), le moyen lisible par un ordinateur comprenant :
- un moyen pour afficher un menu de configuration de commande virtuel sur l'affichage de terminal (6), tandis qu'une pluralité de fonctions auxiliaires (8) et une pluralité d'éléments de commande virtuels (9) sont présentés à l'utilisateur sur un affichage de terminal (6),
- un moyen pour recevoir une entrée de configuration d'utilisateur pour mettre en correspondance une de la pluralité des fonctions auxiliaires (8) avec une de la pluralité des éléments de commande virtuels (9),
- un moyen pour mettre en correspondance l'élément de commande virtuel sélectionné avec la fonction auxiliaire sélectionnée de l'unité de commande électronique (4) conformément à l'entrée de configuration de l'utilisateur, tandis que la mise en correspondance est effectuée en mémorisant les informations électroniques concernant l'affectation de l'élément de commande virtuel sélectionné et la fonction auxiliaire sélectionnée l'un par rapport à l'autre dans une mémoire,
- un moyen pour afficher au moins un élément de commande virtuel sur l'affichage de terminal (6),
- un moyen pour recevoir, par l'intermédiaire du terminal d'utilisateur (2), une entrée de commande de l'utilisateur pour la fonction auxiliaire sélectionnée en utilisant au moins un élément de commande virtuel affiché sur l'affichage de terminal (6), et
- un moyen pour produire un signal de commande mis en correspondance avec la fonction auxilaire sélectionnée de l'unité de commande électronique (4) conformément à l'entrée de commande d'utilisateur et fournir le signal de commande à l'unité de commande électronique (4) par l'intermédiaire du bus de données (1) pour que l'unité de commande électronique (4) commande l'élément fonctionnel de la machine agricole (20, 21) conformément au signal de commande.
